# FASCICULE DE BREVET EUROPEEN

(11) **EP 0 486 337 B1**
(45) Date de publication et mention de la délivrance du brevet: **21.12.1994**
(21) Numéro de dépôt: 91402775.0
(22) Date de dépôt: 17.10.1991
(51) Int. Cl.: B60G 3/20, B60G 15/06

(54) **Perfectionnements aux trains avant de véhicule automobile**
Verbesserungen an Vorderachsen von Kraftfahrzeugen
Improvements on front axles of automotive vehicles

(30) Priorité: 12.11.1990 FR 9014003
(43) Date de publication de la demande: 20.05.1992
(73) Titulaire: AUTOMOBILES PEUGEOT, 75116 Paris (FR); AUTOMOBILES CITROEN, 92200 Neuilly-sur-Seine (FR)
(72) Inventeur: Froumajou, Armand, F-95110 Sannois (FR)
(74) Mandataire: Durand, Yves Armand Louis

(56) Documents cités:
- EP-A- 0 220 851
- DE-A- 3 912 043
- FR-A- 1 533 988
- FR-A- 2 285 256
- GB-A- 2 100 201
- AUTOMOTIVE ENGINEERING , vol. 98, no. 1, Janvier 1990, WARRENDALE, U.S. pages 85-86; STUART BIRCH : "Britain s return to sports cars".
- PATENT ABSTRACTS OF JAPAN , vol. 14, no. 152 (M-953)(4095) 23 Mars 1990 & JP-A-2 014 907

## Description

La présente invention a essentiellement pour objet des perfectionnements aux suspensions pour trains avant de véhicule automobile.

On connaît déjà des suspensions pour trains avant de véhicule automobile comprenant notamment :
- d'une part un triangle inférieur articulé sur la structure du véhicule et sur lequel est monté articulé un élément de suspension porteur également articulé sur ladite structure ; et
- d'autre part un triangle supérieur qui est lui-même articulé sur l'élément de suspension porteur.

Dans de tels trains avant, le triangle supérieur et le triangle inférieur sont articulés par l'intermédiaire d'une rotule sur une pièce pivotante qui supporte la roue. Une telle suspension est connue, par exemple de GB-A-2 100 201.

Mais, avec ce genre de trains avant, l'élément porteur peut tourner d'un certain angle autour de son axe sous l'effet d'actions de freinage ou d'accélération, en faisant travailler l'articulation de cet élément porteur sur le triangle inférieur, ce qui entraîne un déplacement de la rotule entre triangle supérieur et la pièce pivotante de support de roue vers l'avant ou vers l'arrière. Or, un tel déplacement est particulièrement désavantageux, car il provoque des variations importantes de la chasse.

La présente invention a donc pour but de remédier notamment à l'inconvénient ci-dessus en proposant des perfectionnements aux trains avant du genre mentionné ci-dessus, ces perfectionnements permettant un contrôle de la rotation de l'élément porteur et donc de la chasse, tout en laissant un degré de liberté suffisant à la liaison entre l'élément porteur et le triangle inférieur, afin d'assurer, au niveau du triangle inférieur, un fonctionnement correct du filtrage des petits chocs longitudinaux qui sont engendrés par les irrégularités des routes et qui sont source de vibrations et de bruits.

A cet effet, l'invention a pour objet une suspension pour train de véhicule automobile du type comprenant d'une part un triangle inférieur articulé sur la structure du véhicule et sur lequel est monté articulé un élément de suspension porteur, et d'autre part un triangle supérieur lui-même articulé sur l'élément porteur, chaque triangle étant articulé par l'intermédiaire d'une rotule sur une pièce pivotante supportant une roue, ledit élément porteur prenant appui sur le triangle inférieur par une articulation unique qui est disposée à l'aplomb de cet élément porteur caractérisée en ce que l'axe de l'articulation est relie à l'élément porteur et par au moins une biellette de réaction à un point du triangle inférieur ou à un point de la structure du véhicule.

Selon une autre caractéristique de l'invention, l'axe d'articulation unique de l'élément porteur sur le triangle inférieur comporte un prolongement d'un côté ou de l'autre pour permettre la fixation articulée de l'une des extrémités de la biellette de réaction.

L'autre extrémité de la biellette de réaction est fixée de façon articulée sur la structure du véhicule, et ce suivant le même axe que l'axe de pivotement du triangle inférieur sur ladite structure, ou suivant un axe différent.

Suivant un autre mode de réalisation, l'autre extrémité de la biellette de réalisation est directement fixée sur le triangle inférieur soit du côté de l'axe d'articulation de ce triangle sur la structure du véhicule, soit du côté de la rotule associée à ce triangle et à la pièce pivotante supportant la roue.

Selon encore une autre caractéristique de cette invention, le prolongement de l'axe d'articulation unique précité est muni d'un manchon interposé entre l'extrémité de la biellette de réaction articulée sur ledit prolongement, et l'élément porteur.

On précisera encore ici que la biellette de réaction est articulée de façon élastique sur le prolongement précité de l'axe d'articulation unique.

De même, l'articulation unique reliant une extrémité en forme de chape de l'élément porteur à l'un des bras du triangle inférieur, est une articulation élastique comportant une armature interne conférant une bonne rigidité radiale à ladite articulation unique.

Mais d'autres avantages et caractéristiques de l'invention apparaîtront mieux dans la description détaillée qui suit et se réfère aux dessins annexés, donnés uniquement à titre d'exemple, et dans lesquels.

La figure 1 est une vue schématique partielle et en perspective d'un train avant de véhicule automobile équipé des perfectionnements de cette invention, suivant un premier mode de réalisation.

Les figures 2 à 4 sont des vues similaires à la figure 1, mais illustrent respectivement trois autres modes de réalisation des perfectionnements selon cette invention.

La figure 5 est une vue agrandie et en coupe de l'articulation unique de l'élément porteur sur l'un des bras du triangle inférieur.

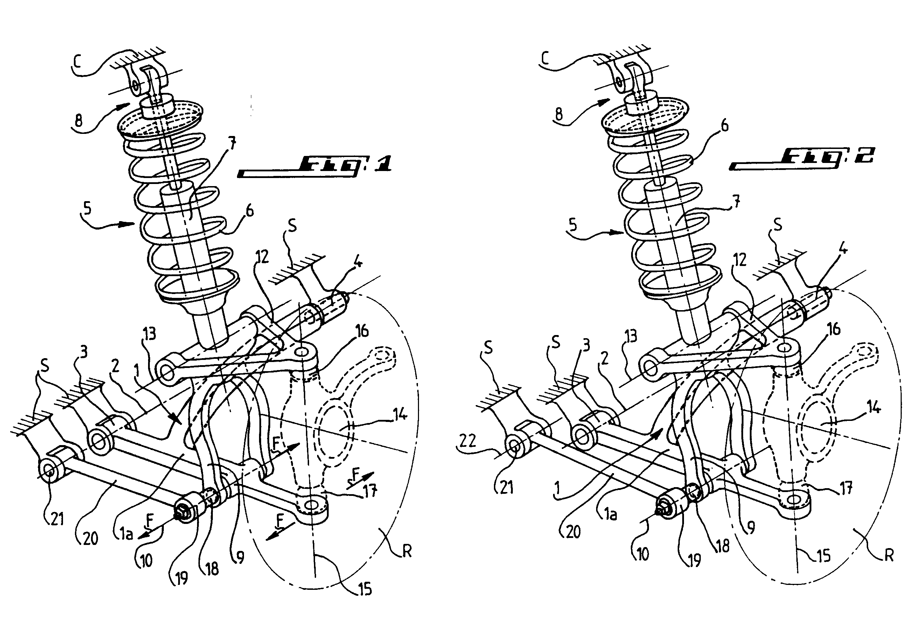

En se reportant notamment aux figures 1 à 4, on voit un train avant de véhicule automobile qui comprend un triangle inférieur 1 qui est articulé autour d'un axe 2 par des paliers 3 et 4 sur la structure S du véhicule.

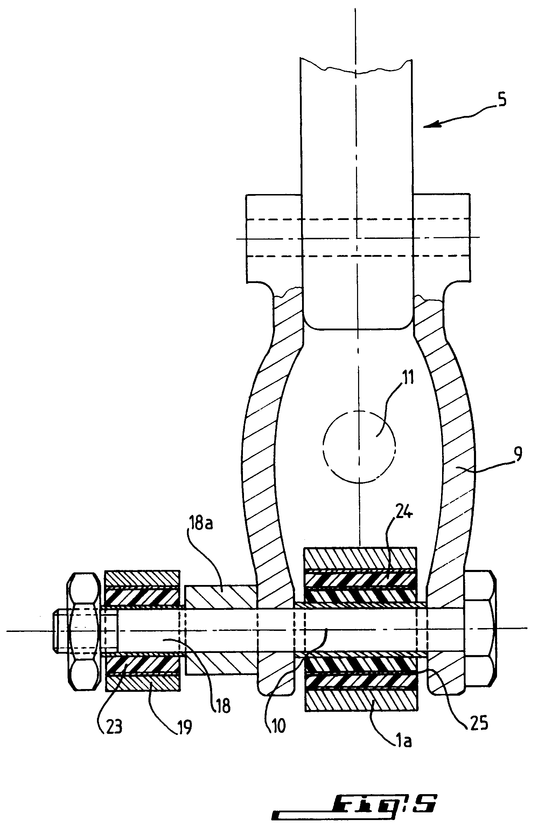

Un élément de suspension porteur 5 comprenant un ressort 6 et un amortisseur 7 concentriques, prend appui de façon articulée et par sa partie supérieure 8 sur la caisse C du véhicule, cet élément porteur 5 comprenant une extrémité inférieure 9 en forme de chape qui est articulée au triangle inférieur 1, et plus précisément sur l'un 1a des bras de ce triangle, suivant une articulation unique à l'aplomb de l'élément porteur 5, et dont on a repéré l'axe en 10. La chape 9 est, suivant l'exemple représenté, élargie pour laisser le passage à un arbre de transmission montré schématiquement en 11 sur la figure 5.

La chape 9 faisant partie de l'élément porteur 5 supporte un triangle supérieur 12 monté articulé et à rotation sur ladite chape suivant un axe 13 sensiblement parallèle à l'axe 2.

On a montré schématiquement en 14 sur les figures 1 à 4, une pièce pivotante formant support de roue R et qui peut pivoter suivant un axe 15 entre le triangle inférieur 1, ou plus précisément le bras la de ce triangle, et le triangle supérieur 12. Plus précisément, l'axe 15 de pivotement de la pièce pivotante 14 passe par deux rotules, à savoir une rotule supérieure 16 agencée entre le triangle supérieure 12 et la pièce pivotante 14 et une rotule inférieure 17 agencée entre le bras 1a du triangle inférieur 1 et ladite pièce pivotante 14.

Suivant une caractéristique de l'invention, l'axe 10 d'articulation unique de la chape 9 de l'élément porteur 5 sur le bras 1a du triangle inférieur 1 comporte, d'un côté, un prolongement 18 sur lequel est fixée, de façon articulée l'une 19 des extrémités d'une biellette de réaction 20 dont l'autre extrémité 21 est fixée à un point de la structure S du véhicule ou à un point du triangle inférieur 1.

Suivant l'exemple de réalisation représenté sur la figure 1, l'extrémité 21 de la biellette 20 est directement articulée sur la structure S ou sur le berceau (non représenté), et cela suivant le même axe que l'axe 2 de pivotement du triangle inférieur 1 sur ladite structure. On comprend donc que l'axe 13 d'articulation du triangle supérieur 12 sur l'élément porteur 5 demeurera parallèle à l'axe 2 en débattement, de sorte que la chasse sera contrôlée et demeurera sensiblement constante.

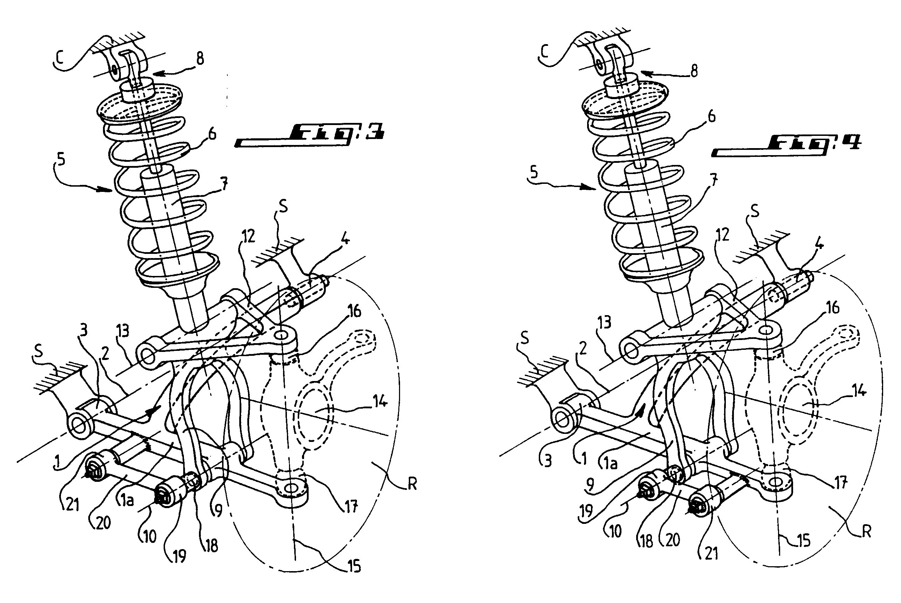

Suivant la variante illustrée par la figure 2, l'extrémité 21 de la biellette de réaction 20 est encore articulée directement sur le berceau ou la structure du véhicule, mais ici suivant un axe 22 qui est différent de l'axe 2 d'articulation du triangle inférieur. Dans ce cas, la biellette 20 provoquera une variation de chasse contrôlée géométriquement.

Dans le mode de réalisation illustré par la figure 3, l'extrémité 21 de la biellette est directement fixée sur le bras 1a du triangle inférieur, et cela du côté du palier 3. Le résultat est le même que dans la réalisation de la figure 1, avec cependant l'avantage que l'on supprime une fixation sur la caisse.

Si l'on se reporte maintenant à la figure 4, on voit que, comme dans le cas précédent, l'extrémité 21 de la biellette 20 est directement fixée sur le bras 1a du triangle inférieur 1, mais ici l'extrémité 21 est fixée du côté de la rotule inférieure 17, ce qui est avantageux pour favoriser le braquage de la roue et pour aussi permettre le logement de la biellette 20 à l'intérieur de la jante de roue R.

Dans tous les modes de réalisation qui viennent d'être décrits, et comme on le voit mieux sur la figure 5, le prolongement 18 de l'axe 10 de l'articulation unique de la chape 9 de l'élément porteur 5 sur le bras 1a du triangle 1, est muni d'un manchon 18a interposé entre l'extrémité 19 de la biellette de réaction 20 et la chape 9. Ainsi, l'augmentation de l'entraxe entre les articulations du bras 1a et de l'extrémité 19 de la biellette 20 par le manchon 18a renforcera avantageusement l'effet anti-couple de la biellette de réaction 20.

Comme on le voit encore sur la figure 5, l'articulation de l'extrémité 19 de la biellette de réaction 20 est une articulation élastique par le fait qu'un manchon élastique 23 est interposé entre l'extrémité 19 et le prolongement 18 de l'axe 10.

De même, l'articulation unique d'axe 10 entre la chape 9 et le bras 1a du triangle inférieur 1 est une articulation élastique possédant une grande rigidité radiale par le fait que, suivant l'exemple représenté, le manchon élastique 24 disposé entre le bras 1a du triangle inférieur et l'axe 10 est muni d'un manchon métallique 25 constituant en quelque sorte une armature interne, étant entendu que l'on pourrait envisager tout autre type d'armature sans sortir du cadre de l'invention.

On comprend donc de tout ce qui précède que la biellette de réaction 20 permet de contrôler la rotation sur son axe de l'élément porteur 5, et par conséquent le déplacement de la rotule supérieur 16, et la chasse 1, étant entendu qu'un degré de liberté suffisant est laissé à la liaison de l'élément porteur 5 et du triangle inférieur 1 pour éviter toute contrainte hyperstatique au montage, et pour assurer, au niveau du triangle inférieur 1, un fonctionnement correct du filtrage des petits chocs longitudinaux engendrés par les inégalités de la route et matérialisés par les flèches F sur la figure 1.

Bien entendu, l'invention n'est nullement limitée aux modes de réalisation décrits et illustrés qui n'ont été donnés qu'à titre d'exemple.

C'est ainsi que les articulations élastiques de l'élément porteur sur le triangle inférieur et de la biellette de réaction sur le prolongement 18 peuvent revêtir une forme quelconque.

Cette invention comprend donc tous les équivalents techniques des moyens décrits ainsi que leurs combinaisons si celles-ci sont effectuées suivant les revendications.

## Revendications

1. Suspension pour train avant de véhicule automobile du type comprenant d'une part un triangle inférieur (1) articulé sur la structure (S) du véhicule et sur lequel est monté articulé un élément de suspension porteur (5), et d'autre part un triangle supérieur (12) lui-même articulé sur l'élément porteur (5), chaque triangle étant articulé par l'intermédiaire d'une rotule (16, 17) sur une pièce pivotante (14) supportant une roue (R), ledit élément porteur (5) prenant appui sur le triangle inférieur (1) par une articulation unique qui est disposée à l'aplomb de cet élément porteur, caractérisée en ce que l'axe (10) de ladite articulation unique est relié à l'élément porteur (5) et par au moins une biellette de réaction (20) à un point du triangle inférieur (1) ou à un point de la structure (S) du véhicule.

2. Suspension selon la revendication 1, caractérisée en ce que l'axe (10) d'articulation unique de l'élément porteur (5) sur le triangle inférieur (1) comporte un prolongement (18) d'un côté ou de l'autre pour permettre la fixation articulée de l'une (19) des extrémités de la biellette de réaction (20).

3. Suspension selon la revendication 1 ou 2, caractérisée en ce que l'autre extrémité (21) de la biellette de réaction (20) est fixée de façon articulée sur la structure (S) du véhicule, et ce suivant le même axe que l'axe (2) de pivotement du triangle inférieur (1) sur ladite structure, ou suivant un axe différent (22).

4. Suspension selon la revendication 1 ou 2, caractérisée en ce que l'autre extrémité (21) de la biellette de réaction (20) est directement fixée sur le triangle inférieur (1) soit du côté de l'axe (2) d'articulation de ce triangle sur la structure (S) du véhicule, soit du côté de la rotule (17) associée à ce triangle et à la pièce pivotante (14) supportant la roue.

5. Suspension selon l'une des revendications précédentes, caractérisée en ce que le prolongement (18) de l'axe d'articulation unique précité (10) est muni d'un manchon (18a) interposé entre l'extrémité (19) de la biellette (20) articulée sur ledit prolongement, et l'élément porteur (5).

6. Suspension selon l'une des revendications précédentes, caractérisée en ce que la biellette de réaction (20) est articulée de façon élastique sur le prolongement (18) de l'axe d'articulation unique (10).

7. Suspension selon l'une des revendications précédentes, caractérisée en ce que l'articulation unique (10) reliant une extrémité en forme de chape (9) de l'élément porteur (5) à l'un (1a) des bras du triangle inférieur (1), est une articulation élastique comportant une armature interne (25) conférant une bonne rigidité radiale à ladite articulation unique.

## Claims

1. Suspension for the front axle assembly of an automotive vehicle, of the type comprising on the one hand a lower triangle (1) pivotally connected to the structure (S) of the vehicle and onto which is pivotally mounted a supporting element (5), each triangle being pivotally connected through the medium of a ball joint (16, 17) onto a swinging part (14) carrying one wheel (R), the said supporting element (5) bearing upon the lower triangle (1) with a single pivotal connection which is disposed plumb with this bearing element, characterized in that the axis (10) of the said single pivotal connection is connected to the supporting element (5) and by at least one reaction link (20) to one point of the lower triangle (1) or to one point of the structure (S) of the vehicle.

2. Suspension according to claim 1, characterized in that the axis (10) of the single pivotal connection of the supporting element (5) on the lower triangle (1) comprises an extension (18) on one side or on the other one to permit the pivotal fastening of one (19) of the ends of the reaction link (20).

3. Suspension according to claim 1 or 2, characterized in that the other end (21) of the reaction link (20) is fastened in a pivotal manner to the structure (S) of the vehicle and this along the same axis as the pivot axis (2) of the lower triangle (1) on the said structure or along a different axis (22).

4. Suspension according to claim 1 or 2, characterized in that the other end (21) of the reaction link (20) is directly fastened onto the lower triangle (1) either towards the axis (2) of pivotal connection of this triangle onto the structure (S) of the vehicle or towards the ball joint (17) associated with this triangle and to the swinging part (14) carrying the wheel.

5. Suspension according to one of the foregoing claims, characterized in that the extension (18) of the aforesaid single pivotal connection axis (10) is provided with a bushing (18a) interposed between the end (19) of the link (20) pivotally connected onto the said extension and the supporting element (5).

6. Suspension according to one of the foregoing claims, characterized in that the reaction link (20) is pivotally connected in an elastic manner onto the extension (18) of the single pivotal connection axis (10).

7. Suspension according to one of the foregoing claims, characterized in that the single pivotal connection (10) connecting one yoke-shaped end (9) of the supporting element (5) to one (1a) of the arms of the lower triangle (1) is an elastic pivotal connection comprising an internal frame (25) imparting a good radial rigidity to the said single pivotal connection.

## Patentansprüche

1. Aufhängung für den Vorderradachssatz eines Kraftfahrzeugs, derjenigen Gattung einerseits mit einem an dem Aufbau (S) des Fahrzeugs angelenkten unteren Dreieck (1), an welchem ein Trögeraufhöngungselement (5) gelenkig angeordnet ist, und andererseits mit einem selber an dem Trögerelement (5) angelenkten oberen Dreieck (12), wobei jedes Dreieck über ein Kugelgelenk (16, 17) an einem ein Rad (R) tragendes Schwenkglied (14) angelenkt ist, wobei das besagte Trägerelement (5) sich an dem unteren Dreieck (1) durch ein einziges Gelenk, das lotrecht zu diesem Trägerelement angeordnet ist, abstützt, dadurch gekennzeichnet, dass die Achse (10) des besagten einzigen Gelenkes mit dem Trögerelement (5) und durch wenigstens einen Reaktionslenker (20) mit einem Punkt des unteren Dreiecks (1) oder mit einem Punkt des Fahrzeugaufbaues (S) verbunden ist.

2. Aufhängung nach Anspruch 1, dadurch gekennzeichnet, dass die Achse (10) der einzigen Anlenkung des Trägerelementes (5) an dem unteren Dreieck (1) eine Verlängerung (18) auf der einen oder der anderen Seite aufweist, um die gelenkige Befestigung des einen Endes (19) der Enden des Reaktionslenkers (20) zu gestatten.

3. Aufhängung nach Anspruch 1 oder 2, dadurch gekennzeichnet, dass das andere Ende (21) des Reaktionslenkers (20) in gelenkiger Weise an dem Fahrzeugaufbau (S) befestigt ist und zwar dies entlang derselben Achse, wie die Achse (2) zum Verschwenken des unteren Dreiecks (1) an dem besagten Aufbau oder entlang einer unterschiedlichen Achse (22).

4. Aufhängung nach Anspruch 1 oder 2, dadurch gekennzeichnet, dass das andere Ende (21) des Reaktionslenkers (20) unmittelbar an dem unteren Dreieck (1) entweder auf der der Achse (2) zugewandten Seite zur Anlenkung dieses Dreiecks an dem Fahrzeugaufbau (S) oder auf der dem diesem Dreieck zugeordneten Kugelgelenk (17) zugewandten Seite und an dem das Rad tragende Schwenkglied (14) befestigt ist.

5. Aufhängung nach einem der vorangehenden Ansprüche, dadurch gekennzeichnet, dass die Verlängerung (18) der vorgenannten einzigen Gelenkachse (10) mit einer zwischen dem an der besagten Verlängerung angelenkten Ende (19) des Reaktionslenkers (20) und dem Trägerelement (5) zwischengeschalteten Muffe (18a) versehen ist.

6. Aufhängung nach einem der vorangehenden Ansprüche, dadurch gekennzeichnet, dass der Reaktionslenker (20) in elastischer Weise an der Verlängerung (18) der einzigen Gelenkachse (10) angelenkt ist.

7. Aufhängung nach einem der vorangehenden Ansprüche, dadurch gekennzeichnet, dass das ein gabelbügelförmiges Ende (9) des Trägerelementes (5) mit einem (1a) der Arme des unteren Dreiecks (1) verbindende einzige Gelenk (10) ein eine, eine gute radiale Steifheit dem besagten einzigen Gelenk verleihende innere Bewehrung (25) aufweisendes elastisches Gelenk ist.
